# EUROPÄISCHE PATENTANMELDUNG

(11) **EP 4 001 675 A1**
(43) Veröffentlichungstag der Anmeldung: **25.05.2022**
(21) Anmeldenummer: 21205867.1
(22) Anmeldetag: 02.11.2021
(51) Int. Cl.: F16B 13/12

(54) **SPREIZDÜBEL**

(30) Priorität: 20.11.2020 DE 102020130802
(71) Anmelder: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(57) **Zusammenfassung**

Die Erfindung betrifft einen Spreizdübel (1) mit zwei ersten Spreizschenkeln (5) aus einem ersten Kunststoff und zwei zweiten Spreizschenkeln (7) aus einem zweiten Kunststoff. Die zweiten Spreizschenkel (7) sind zwischen den ersten Spreizschenkeln (5) angeordnet. Durch elastische Verbinder (14) sind die ersten Spreizschenkel (5) miteinander verbunden. Durch eine Nut-Zapfen-Verbindung zwischen den elastischen Verbindern (14) und den zweiten Spreizschenkeln (7) werden die zweiten Spreizschenkel (7) bezüglich den ersten Spreizschenkeln (5) axialfest gehalten.

## Beschreibung

Die Erfindung betrifft einen Spreizdübel zur Befestigung in insbesondere Vollbaustoffen, Hohlkammerbausteinen oder Hohlwänden mit den Merkmalen des Oberbegriffs des Anspruchs 1. Gattungsgemäße Spreizdübel werden in ein Bohrloch in einen Ankergrund eingebracht und durch Einführen eines Spreizkörpers, beispielsweise einer Schraube, im Ankergrund verspreizt.

Ein gattungsgemäßer Spreizdübel ist aus der Offenlegungsschrift DE 41 09 120 A1 bekannt. Der in besagter Offenlegungsschrift beschriebene Spreizdübel aus Kunststoff erstreckt sich entlang einer Längsachse und weist zwei jeweils gegenüberliegende Spreizschenkel auf, die beim Einführen einer Schraube in den Spreizdübel sich jeweils radial von der Längsachse wegbewegen. Zwei der sich gegenüberliegenden Spreizschenkel weisen Sperrnocken auf, welche insbesondere dazu dienen, bei einer Verwendung des Spreizdübels in einem Hohlkammerbaustein, ein Hintergreifen im Hohlkammerbaustein zu ermöglichen. Der Spreizdübel weist an einem Einführende einen Spreizkonus auf. Durch das Eindrehen der Schraube in eine Dübelöffnung des Spreizdübels wird dieser Spreizkonus in Richtung der Dübelöffnung gezogen und spreizt hierbei die Spreizschenkel mit den Sperrnocken auseinander, wodurch sich die Sperrnocken nach "außen" in den jeweiligen Untergrund eingraben oder zumindest gegenüber dem Untergrund kraftbeaufschlagt werden.

Aufgabe der Erfindung ist es, einen Spreizdübel bereitzustellen, der ein verbessertes Spreiz- und Tragverhalten bietet.

Diese Aufgabe wird erfindungsgemäß durch die Merkmale des Anspruchs 1 gelöst. Der erfindungsgemäße Spreizdübel erstreckt sich entlang einer Längsachse zwischen einem vorderen Ende und einem hinteren Ende des Spreizdübels. Das "vordere Ende" ist hierbei das Ende, mit welchem voran der Spreizdübel planmäßig in ein Bohrloch in einem Ankergrund eingebracht wird. Das "hintere Ende" weist eine Einführöffnung in einen Spreizkanal des Spreizdübels zum Einführen eines Spreizkörpers, insbesondere einer Schraube oder eines Nagels, auf, um den Spreizdübel aufzuspreizen. Der Spreizkanal erstreckt sich hierbei insbesondere drehsymmetrisch entlang der Längsachse. Am hinteren Ende des Spreizdübels kann ein Radialflansch angeordnet sein, welcher verhindert, dass der Spreizdübel zu tief in das Bohrloch eingeführt wird. Optional können am hinteren Ende auch Mitdrehsicherungen in Form von Rippen oder dergleichen angeordnet sein, welche verhindern, dass sich der Spreizdübel beim Einschrauben einer Schraube im Bohrloch mitdreht. Zwischen dem vorderen und dem hinteren Ende ist ein Spreizabschnitt ausgebildet, der durch Einbringen des Spreizkörpers in den Spreizdübel aufspreizbar ist. Der Spreizabschnitt kann sich hierbei entlang der kompletten Längsachse, also im Wesentlichen über die komplette Länge des Spreizdübels, erstrecken. Es ist jedoch auch möglich, dass der Spreizabschnitt nur teilweise zwischen dem vorderen und dem hinteren Ende ausgebildet ist. Generell ist unter dem "Spreizabschnitt" der Abschnitt des Spreizdübels zu verstehen, welcher sich beim Einführen eines Spreizkörpers aufspreizt. Unter "Aufspreizen" ist zu verstehen, dass sich ein radialer Umfang vergrößert, wenn ein Spreizkörper in den Spreizkanal des Spreizdübels eingeführt, insbesondere eingeschraubt, wird.

Im Spreizabschnitt weist der Spreizdübel sich in Richtung der Längsachse erstreckende erste Spreizschenkel aus einem ersten Kunststoff auf, die sich beim Aufspreizen des Spreizdübels voneinander radial bezüglich der Längsachse entfernen, wodurch sich der radiale Umfang des Spreizdübels im Bereich des Spreizabschnitts vergrößert. Die ersten Spreizschenkel sind insbesondere bezüglich der Längsachse symmetrisch zueinander angeordnet und spreizen in eine jeweils entgegengesetzte erste Spreizrichtung auseinander, wobei die ersten Spreizrichtungen orthogonal zur Längsachse sind.

Kennzeichnend für die Erfindung ist, dass in Umfangsrichtung des Spreizdübels zwischen benachbarten ersten Spreizschenkeln mindestens ein zweiter, insbesondere ebenfalls halbschalenartiger, Spreizschenkel aus einem zum ersten Kunststoff verschiedenen zweiten Kunststoff angeordnet ist. Der zweite Spreizschenkel erstreckt sich ebenfalls in Richtung der Längsachse und liegt in einem nicht aufgespreizten Zustand des Spreizdübels insbesondere derart bündig und formschlüssig zwischen den ersten Spreizschenkeln, dass im Spreizbereich kein Zwischenraum zwischen den beiden ersten und dem zweiten Spreizschenkel entsteht. Spreizt der Spreizkörper den Spreizdübel hingegen auf, kann der zweite Spreizschenkel derart radial bezüglich der Längsachse in einer zweiten Spreizrichtung aufspreizen, dass ein Freiraum zwischen dem zweiten Spreizschenkel und den beiden ersten Spreizschenkeln im Spreizbereich entsteht. Die zweite Spreizrichtung des zweiten Spreizschenkels ist insbesondere orthogonal zu den Spreizrichtungen der beiden ersten Spreizschenkel und orthogonal zur Längsachse. Der zweite Spreizschenkel ist aus einem zum ersten Spreizschenkel unterschiedlichen Kunststoff hergestellt. Insbesondere sind die beiden ersten Spreizschenkel und der zweite Spreizschenkel mittels eines Mehrkomponentenspritzgießverfahrens hergestellt. Unter "unterschiedlich" kann auch lediglich eine zu den ersten Spreizschenkeln verschiedene Farbe sein, um den Spreizdübel optisch ansprechender zu gestalten oder um eine vorgeschriebene Einbauposition des Spreizdübels zu verdeutlichen.

Insbesondere weist der zweite Spreizschenkel zumindest in einem mittleren Teilbereich eine Mehrzahl von radial außen liegenden, insbesondere einstückig angespritzten Rippen auf, die insbesondere in Umfangsrichtung verlaufen und die in Richtung des vorderen Endes insbesondere zumindest leicht konvex gewölbt sind. Insbesondere sind die Rippen in Umfangsrichtung länger als in axialer Richtung. Die einzelnen Rippen reihen sich in insbesondere äquidistanten Abständen entlang der Längsachse aneinander. Die Rippen sorgen dafür, dass sich der zweite Spreizschenkel beispielsweise gut in einen Untergrund aus Porenbeton "eingraben" kann. Die Rippen sorgen aber auch dafür, dass ein Hintergreifen bei einer Verwendung in einem Hohlkammerbaustein möglich ist. Genauer formuliert können einzelne Stege, die im Hohlkammerbaustein angeordnet sind, von den Rippen hintergriffen werden, wodurch der Spreizdübel vergleichsweise hohe Haltewerte in derartigen Untergründen erzielen kann.

Weiter ist für die Erfindung kennzeichnend, dass die ersten Spreizschenkel durch mindestens einen verformbaren Verbinder miteinander verbunden sind. Insbesondere ist der Verbinder aus dem gleichen Kunststoff wie die ersten Spreizschenkel und einstückig an diese angespritzt. Der Verbinder kann jedoch auch aus dem zweiten Kunststoff bestehen oder aber aus einem sowohl zum ersten als auch zum zweiten Kunststoff verschiedenen Kunststoff gefertigt sein. Zudem können die Verbinder auch durch Ankleben, Punktschweißen oder dergleichen mit den ersten Spreizschenkeln verbunden sein, sprich, ein einstückiges Anspritzen ist nicht zwingend erforderlich. Wird der Spreizdübel aufgespreizt, bewegen sich die ersten Spreizschenkel auseinander und der Verbinder wird insbesondere in Umfangsrichtung des Spreizdübels gestreckt, respektive gedehnt. Dadurch, dass die ersten Spreizschenkel insbesondere im Wesentlichen nur durch den Verbinder verbunden sind, ist ein leichtes Aufspreizen der ersten Spreizschenkel bei relativ geringem Eindrehmoment des Spreizkörpers gewährleistet. Der Verbinder ist insbesondere derart zwischen den ersten Spreizschenkeln angeordnet, dass er, bezogen auf die Längsachse, radial außerhalb des zweiten Spreizschenkels angeordnet ist und insbesondere zumindest teilweise auf dem zweiten Spreizschenkel aufliegt. Dadurch wird der Verbinder beim Aufspreizen der ersten Spreizschenkel in Umfangsrichtung und insbesondere auch in Spreizrichtung des zweiten Spreizschenkels gedehnt. Somit ist der Verbinder sowohl in Umfangsrichtung als auch in Spreizrichtung des zweiten Spreizschenkels verformbar. Anders formuliert, kann sich der Verbinder sowohl in Umfangsrichtung "längen" oder dehnen als auch zumindest geringfügig in Spreizrichtung des zweiten Spreizschenkels ausweichen. Die Verformbarkeit des Verbinders ist bevorzugt in Umfangsrichtung jedoch größer als in der Spreizrichtung des zweiten Spreizschenkels.

Weiter ist für die Erfindung kennzeichnend, dass der Verbinder mit nur einem der zweiten Spreizschenkel verbunden ist, insbesondere durch eine formschlüssige Verbindung. Genauer formuliert, ist der Verbinder neben der Verbindung zu den ersten Spreizschenkeln lediglich mit einem der zweiten Spreizschenkel verbunden. Dadurch wird dieser eine zweite Spreizschenkel bezüglich der beiden ersten Spreizschenkel axial in Position gehalten oder zumindest in axialer Position stabilisiert. Anders formuliert, sorgt die Verbindung dafür, dass beim Einbringen eines Spreizelements in den Spreizdübel, insbesondere beim Einschrauben einer Schraube, der zweite Spreizschenkel nicht axial entlang der Längsachse bezüglich den ersten Spreizschenkeln verschoben wird. Dadurch, dass der Verbinder nur mit dem zweiten Spreizschenkel verbunden ist, bleibt eine maximale Elastizität des Verbinders in Umfangsrichtung und in Richtung der zweiten Spreizrichtung erhalten. Die Verbindung kann insbesondere formschlüssig sein, jedoch ist auch ein Ankleben oder Anschweißen möglich.

In einer weiteren vorteilhaften Ausgestaltung der Erfindung sind der Verbinder und der zweite Spreizschenkel durch eine Nut-Zapfen-Verbindung verbunden. Hierbei ist die Nut insbesondere im zweiten Spreizschenkel angeordnet und durchdringt diese in radialer Richtung insbesondere gänzlich. Die Nut kann jedoch auch nur teilweise in den zweiten Spreizschenkel eindringen. Eine gänzliche Durchdringung ist bevorzugt, da hierdurch eine stabile formschlüssige Verbindung erreicht werden kann. Entsprechend füllt der Zapfen, der sich vom Verbinder in Richtung der Längsachse erstreckt, bevorzugt die Nut gänzlich aus. Insbesondere wird der Zapfen bei der Herstellung einstückig an den Verbinder an- und in die Nut des zweiten Spreizschenkels eingespritzt. Alternativ kann in einer zweiten Variante der Zapfen auch an dem zweiten Spreizschenkel und die Nut entsprechend im Verbinder angeordnet sein, wobei insbesondere bei filigran ausgestalteten Verbindern die erste Variante bevorzugt ist.

Als besonders stabil hat sich in einer weiteren vorteilhaften Ausgestaltung der Erfindung herausgestellt, dass ein Zapfen und eine Nut der Nut-Zapfen-Verbindung in Längsrichtung verlaufen. Sowohl die Nut als auch der Zapfen erstrecken sich somit axial in Richtung der Längsachse des Spreizdübels. "Stabil" bedeutet, dass durch die bevorzugte Ausgestaltung beim Aufspreizen die Nut zum Zapfen und dadurch der zweite Spreizschenkel bezüglich den ersten Spreizschenkeln axial in Position gehalten wird. Zusätzlich zu der erzielten Stabilität bleibt die Elastizität des Verbinders erhalten.

In einer weiteren vorteilhaften Ausgestaltung der Erfindung sind die ersten Spreizschenkel durch mehrere entlang der Längsachse angeordnete Verbinder miteinander und mit dem einen zweiten Spreizschenkel verbunden. Die Verbinder sind hierbei insbesondere äquidistant entlang der Längsachse zwischen den ersten Spreizschenkeln angeordnet. Jeder einzelne der Verbinder ist hierbei nur mit dem einen zweiten Spreizschenkel verbunden, insbesondere durch eine identische Nut-Zapfen-Verbindung zwischen dem jeweiligen Verbinder und dem zweiten Spreizschenkel. Durch mehrere Verbinder ist gewährleistet, dass der zweite Spreizschenkel über einen größeren Bereich axialfest bezüglich der ersten Spreizschenkel gehalten ist. Zudem wird durch die Mehrzahl der Verbinder ein homogenes Aufspreizverhalten und ein homogener Eindrehwiderstand des Spreizkörpers erreicht.

In einer weiteren vorteilhaften Ausgestaltung der Erfindung umfasst der Spreizdübel zwei sich bezüglich der Längsachse gegenüberliegende erste Spreizschenkel, zwei zweite Spreizschenkel, sowie mindestens zwei gegenüberliegende Verbinder, wobei jeder der Verbinder mit genau einem der zweiten Spreizschenkel verbunden ist, und wobei die formschlüssigen Verbindungen in einer gemeinsamen Ebene angeordnet sind. Durch die Ausgestaltung des Spreizdübels liegen die beiden ersten Spreizschenkel und die beiden dazwischen angeordneten zweiten Spreizschenkel derart aneinander an, dass der Spreizdübel in einem nicht aufgespreizten Zustand in Umfangsrichtung insbesondere im Spreizabschnitt insbesondere komplett geschlossen ist. Anders formuliert liegen die ersten und die zweiten Spreizschenkel so aneinander an, dass kein freier Zwischenraum in Längsrichtung zwischen den Spreizschenkeln im Spreizabschnitt vorhanden ist. Sowohl die ersten als auch die zweiten Spreizschenkel weisen eine insbesondere halbschalenförmige Gestalt auf, wobei sich die zweiten Spreizschenkel radial innen an die ersten Spreizschenkel anschmiegen. Der kreisrunde Spreizkanal des Spreizdübels ist dadurch insbesondere im Wesentlichen durch die "innenliegenden" zweiten Spreizschenkel gebildet, wobei sich der Spreizkanal vom hinteren Ende des Spreizdübels in Richtung des vorderen Endes erstreckt. Die ersten Spreizschenkel und die dazu jeweils benachbart angeordneten zweiten Spreizschenkel sind um 90° versetzt um die Längsachse herum zueinander angeordnet, sprich die ersten Spreizschenkel spreizen in entgegengesetzte erste Spreizrichtungen und die zweiten Spreizschenkel dementsprechend in entgegengesetzte zweite Spreizrichtungen, wobei die ersten und die zweiten Spreizrichtungen orthogonal zueinander stehen. Die gemeinsame Ebene, in welcher die formschlüssigen Verbindungen zwischen den gegenüberliegenden Verbindern und den beiden ersten Spreizschenkeln ausgebildet sind, kann eine Axialebene durch die Längsachse sein. Die gemeinsame Ebene kann jedoch auch eine Ebene sein, die orthogonal zu der ersten Spreizrichtung der ersten Spreizschenkel verläuft. Durch die spezielle Anordnung der formschlüssigen Verbindungen ist ein optimales Aufspreizverhalten des Spreizdübels gewährleistet.

In einer weiteren vorteilhaften Ausgestaltung der Erfindung weist der Dübel einander paarweise zugeordnete, in der Längsrichtung des Spreizdübels benachbarte Verbinder auf. Insbesondere sind die benachbarten Verbinder spiegelsymmetrisch bezüglich einer Ebene angeordnet, die orthogonal bezüglich der zweiten Spreizrichtung und durch die Längsachse verläuft. Durch die spezielle Anordnung wird ein gleichmäßiges Aufspreizen der beiden ersten und der beiden zweiten Spreizschenkel erreicht.

In einer weiteren vorteilhaften Ausgestaltung der Erfindung sind die Verbindungen der Verbinder mit dem einen zweiten Spreizschenkel auf einer, insbesondere zur Längsachse parallelen, Geraden angeordnet. Dies hat sich aus produktionstechnischer Sicht als vorteilhaft erwiesen. Zudem ist hierdurch eine stabile Anbindung des zweiten Spreizschenkels an die jeweiligen Verbinder gewährleistet.

Um eine möglichst hohe Stabilität des Spreizdübels bei der Montage und eine zusätzliche Stabilisierung der ersten und der zweiten Spreizschenkel zueinander zu erzielen, umhüllen in einer weiteren vorteilhaften Ausgestaltung der Erfindung die ersten Spreizschenkel die zweiten Spreizschenkel zumindest teilweise. Insbesondere weisen hierbei die zweiten Spreizschenkel neben dem jeweiligen mittleren Teilbereich, in welchem insbesondere die Mehrzahl der Rippen angeordnet sind, jeweils einen vorderen und einen hinteren Teilbereich auf. Der vordere Teilbereich ist dem vorderen Ende des Spreizdübels und der hintere Teilbereich dem hinteren Ende des Spreizdübels zugewandt. Insbesondere sind sowohl im vorderen als auch im hinteren Teilbereich ein oder mehrere einander paarweise in der Längsrichtung des Spreizdübels benachbarte Verbinder angeordnet, wobei die vorderen und die hinteren Teilbereiche radial bezüglich der Längsachse insbesondere unterhalb der Verbinder angeordnet sind und somit auch zumindest teilweise von den ersten Spreizschenkeln umhüllt werden. Insbesondere liegen die Verbinder in den vorderen und in den hinteren Teilbereichen auf den zweiten Spreizschenkeln auf.

Bevorzugt sind die ersten Spreizschenkel als eine äußere Hülse und die zweiten Spreizschenkel als eine innere Hülse ausgestaltet, wobei die innere Hülse formschlüssig in der äußeren Hülse gelagert ist. Dies wird insbesondere dadurch erreicht, dass in dem Mehrkomponentenspritzgießverfahren zur Herstellung des erfindungsgemäßen Spreizdübels zuerst die beiden zweiten Spreizschenkel aus dem zweiten Kunststoff mit den entsprechenden Nuten gespritzt werden. Anschließend werden die ersten Spreizschenkel aus dem ersten Kunststoff zusammen mit den Verbindern und den an den Verbindern angeordneten Zapfen um die beiden ersten Spreizschenkel "herumgespritzt", wobei die Zapfen in die Nuten eingespritzt werden.

In einer weiteren vorteilhaften Ausgestaltung der Erfindung weisen der respektive die Verbinder einen Verbinderkörper mit mindestens zwei Verbindungsstegen auf, über die die zwei benachbarten ersten Spreizschenkel mit dem Verbinder verbunden sind, wobei zwischen den Verbindungsstegen der Verbinderkörper Verbindungsabschnitte aufweist, die sich beim Aufspreizen der ersten Spreizschenkel so bewegen, dass sie sich weiter in Umfangsrichtung des Spreizdübels erstrecken, als bei nicht aufgespreiztem Spreizdübel. Die Verbindungsabschnitte sind insbesondere U- oder V-förmig ausgestaltet. Insbesondere weist jeder der Verbinder zwei U- oder V-förmige Verbindungsabschnitte auf, wobei diese symmetrisch bezüglich der Längsachse und einander abgewandt angeordnet sind. Über die Verbindungsstege sind die Verbindungsabschnitte mit den beiden ersten Spreizschenkeln verbunden. Beim Aufspreizen des Spreizdübels verhalten sich die Verbindungsstege insbesondere im Wesentlichen plastisch und nur die Verbindungsabschnitte bewegen sich in Umfangsrichtung des Spreizdübels. Insbesondere sind die Verbindungsstege und die Verbindungsabschnitte spiegelsymmetrisch bezüglich einer Spiegelebene, die durch die Längsachse verläuft, ausgestaltet.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines Ausführungsbeispiels erklärt.

Es zeigen:
- Figur 1: einen erfindungsgemäßen Spreizdübel in einer perspektivischen Darstellung;
- Figur 2: eine äußere Hülse des erfindungsgemäßen Spreizdübels aus Figur 1 in einer perspektivischen Schnittdarstellung;
- Figur 3: eine innere Hülse des erfindungsgemäßen Spreizdübels aus Figur 1 in einer perspektivischen Darstellung; und
- Figur 4: einen Schnitt durch den erfindungsgemäßen Spreizdübel aus Figur 1 in einer perspektivischen Darstellung.

Der erfindungsgemäße Spreizdübel 1 erstreckt sich entlang einer Längsachse L und weist ein vorderes Ende 2, mit welchem voran der Spreizdübel 1 planmäßig in ein Bohrloch einzubringen ist (nicht dargestellt). In ein hinteres Ende 3 kann ein Spreizkörper, insbesondere eine Schraube, eingebracht werden, um den Spreizdübel 1 aufzuspreizen (nicht dargestellt). Zwischen dem vorderen und dem hinteren Ende 2, 3 des Spreizdübels 1 ist ein Spreizabschnitt 4 ausgebildet. Zwei erste halbschalenförmige Spreizschenkel 5 des Spreizdübels 1 erstrecken sich entlang der Längsachse L. Die beiden ersten Spreizschenkel 5 sind bezüglich der Längsachse L symmetrisch zueinander, bezogen auf die Längsachse L sich gegenüberliegend angeordnet, und bestehen aus einem ersten Kunststoff. Die ersten Spreizschenkel 5 weisen jeweils eine einander entgegengerichtete erste Spreizrichtung 6 auf, wobei die Spreizrichtungen 6 orthogonal zur Längsachse L orientiert sind. Wird ein Spreizkörper in den Spreizdübel 1 eingebracht, spreizen die ersten Spreizschenkel 5 folglich in entgegengesetzte erste Spreizrichtungen 6 orthogonal zur Längsachse L auf, wodurch der Durchmesser des Spreizdübels 1 im Spreizabschnitt 4 vergrößert wird.

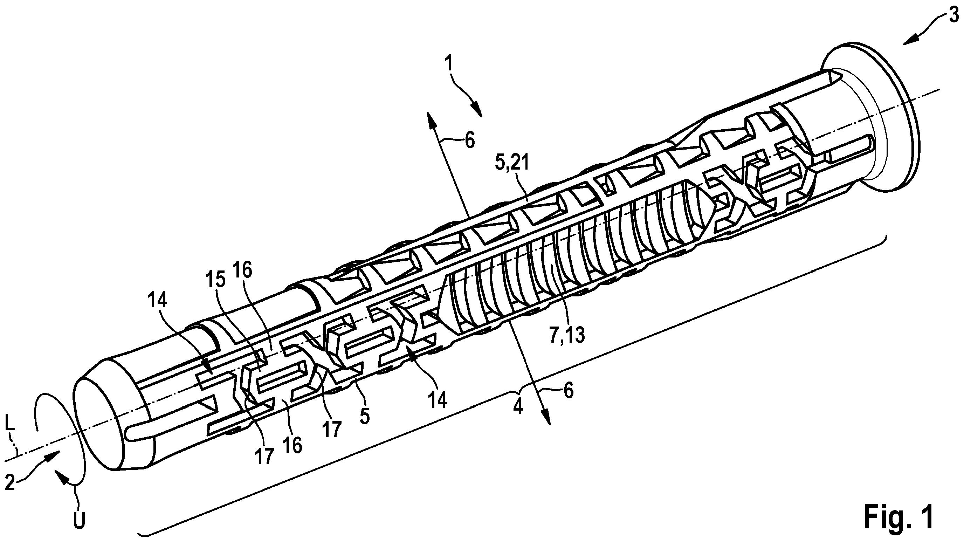

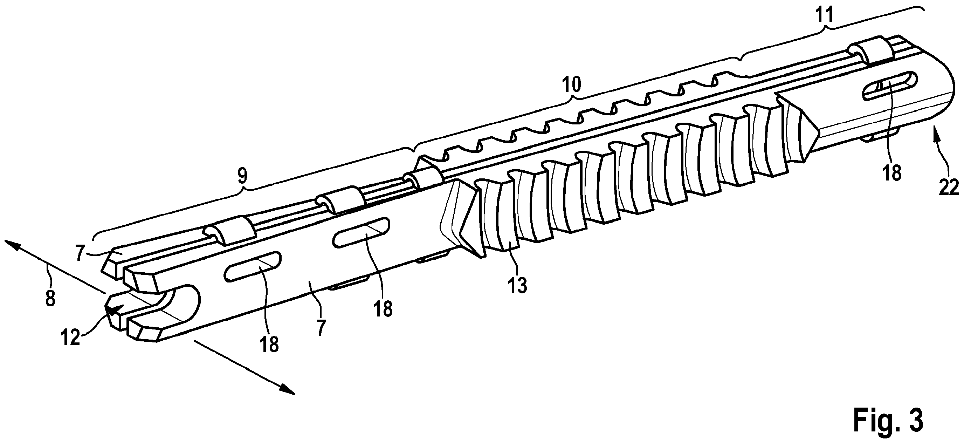

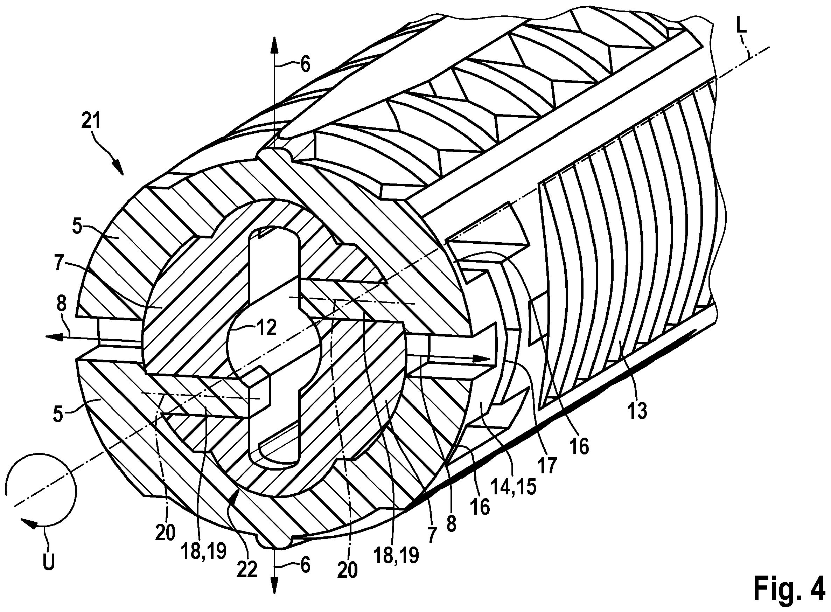

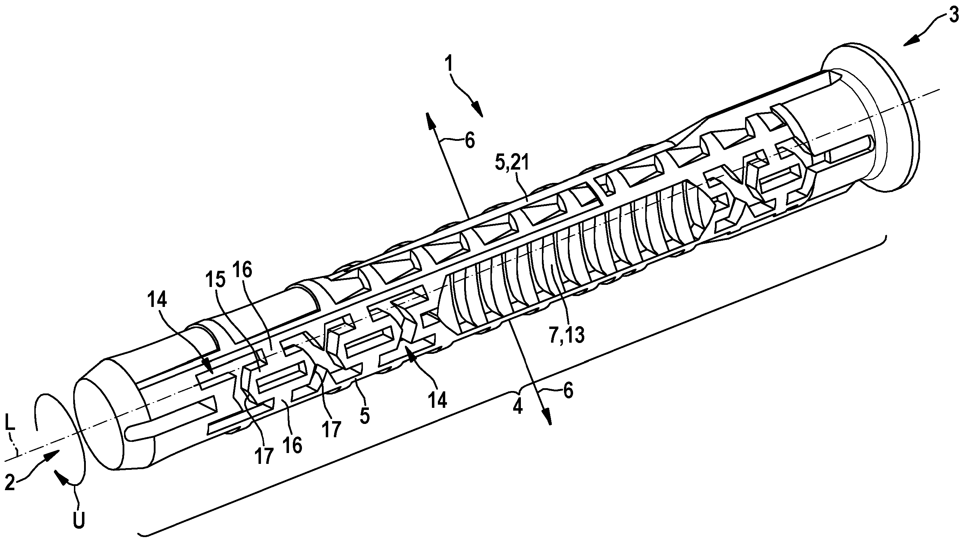

Zwischen den beiden ersten Spreizschenkeln 5 des Spreizdübels 1 sind zwei zweite halbschalenförmige Spreizschenkel 7 angeordnet. In Figur 1 ist nur ein zweiter Spreizschenkel 7 ersichtlich, wohingegen beide zweite Spreizschenkel 7 in Figur 3 separat und in Figur 4 geschnitten dargestellt sind. Die beiden zweiten Spreizschenkel 7 sind aus einem zweiten Kunststoff gefertigt und sind formschlüssig zwischen den beiden ersten Spreizschenkeln 5 eingebettet, was insbesondere in der Schnittdarstellung der Figur 4 deutlich wird. Die zweiten Spreizschenkel 7 weisen jeweils eine einander entgegengesetzte zweite Spreizrichtung 8 auf, welche orthogonal zur Längsachse L und zu den ersten Spreizrichtungen 6 der ersten Spreizschenkel 5 orientiert sind. Wird ein Spreizkörper in den Spreizdübel 1 eingebracht, spreizen die zweiten Spreizschenkel 7 folglich einander entgegengesetzt in die jeweilige zweite Spreizrichtung 8 auf. Die ersten Spreizschenkel 5 und die zweiten Spreizschenkel 7 bilden gemeinsam den Spreizabschnitt 4, wobei ein Spreizkanal 12, in welchen der Spreizkörper, insbesondere die Schraube, eingebracht wird, im Wesentlichen durch die zweiten Spreizschenkel 7 definiert ist. Die zweiten Spreizschenkel 7 sind in einen vorderen Teilbereich 9, einen mittleren Teilbereich 10 und einen hinteren Teilbereich 11 unterteilt. Der vordere Teilbereich 9 ist dem vorderen Ende 2 des Spreizdübels 1 zugewandt und der hintere Teilbereich 11 ist dem hinteren Ende 3 des Spreizdübels 1 zugewandt. Im mittleren Teilbereich 10 sind an beiden zweiten Spreizschenkeln 7 jeweils eine Mehrzahl von äquidistanten, in Umfangsrichtung U verlaufenden, Rippen 13 angeordnet. Die Rippen 13 sind in Richtung des vorderen Endes 2 des Spreizdübels 1 leicht konvex gekrümmt und dienen insbesondere dazu, beim Aufspreizen des Spreizdübels 1 in den Untergrund einzudringen, in welchem der Spreizdübel 1 verankert wird.

Durch insgesamt zwölf elastische Verbinder 14, die entlang der Längsachse L angeordnet sind, sind die beiden ersten Spreizschenkel 5 elastisch verbunden. Sechs der zwölf elastischen Verbinder 14 weisen eine O-förmige Gestalt auf. Die elastischen Verbinder 14 sind spiegelsymmetrisch zur Längsachse L ausgestaltet. Anders formuliert, weisen die jeweils sechs sich bezüglich der Längsachse L gegenüberliegenden elastischen Verbinder 14 eine identische Gestalt auf.

Die elastischen Verbinder 14 sind einstückig an die beiden ersten Spreizschenkel 5 angespritzt. Die O-förmigen Verbinder 14 umfassen jeweils einen Verbinderkörper 15, zwei Verbindungsstege 16 und jeweils zwei Verbindungsabschnitte 17. Die Verbindungsstege 16 sind im Wesentlichen plastisch und verbinden die beiden ersten Spreizschenkel 5 mit den elastischen Verbindungsabschnitten 17 des Verbindungskörpers 15. Die beiden Verbindungsabschnitte 17 eines jeweiligen Verbinders 14 sind V-förmig ausgestaltet und einander abgewandt angeordnet. Zudem sind die Verbindungsstege 16 und die Verbindungsabschnitte 17 bezüglich einer Spiegelebene, die durch die Längsachse L verläuft, spiegelsymmetrisch. Wird der Spreizdübel 1 durch einen Spreizkörper aufgespreizt, spreizen die ersten Spreizschenkel 5 in die ersten Spreizrichtungen 6 auf, wodurch sich die Verbindungsabschnitte 17 in Umfangsrichtung U des Spreizdübels 1 längen, respektive aufbiegen. Durch das Aufspreizen der zweiten Spreizschenkel 7 in die zweiten Spreizrichtungen 8 werden die elastischen Verbinder 14 zudem ebenfalls zumindest geringfügig in die jeweiligen zweiten Spreizrichtungen 8 gespreizt. Wie in den Figuren 1 und 4 ersichtlich, liegen die elastischen Verbinder 14 auf den zweiten Spreizschenkeln 7 auf. Jeweils zwei elastische Verbinder 14 sind im vorderen Teilbereich 9 des jeweiligen zweiten Spreizschenkels 7 angeordnet. Jeweils ein elastischer Verbinder 14 ist hingegen im hinteren Teilbereich 11 angeordnet.

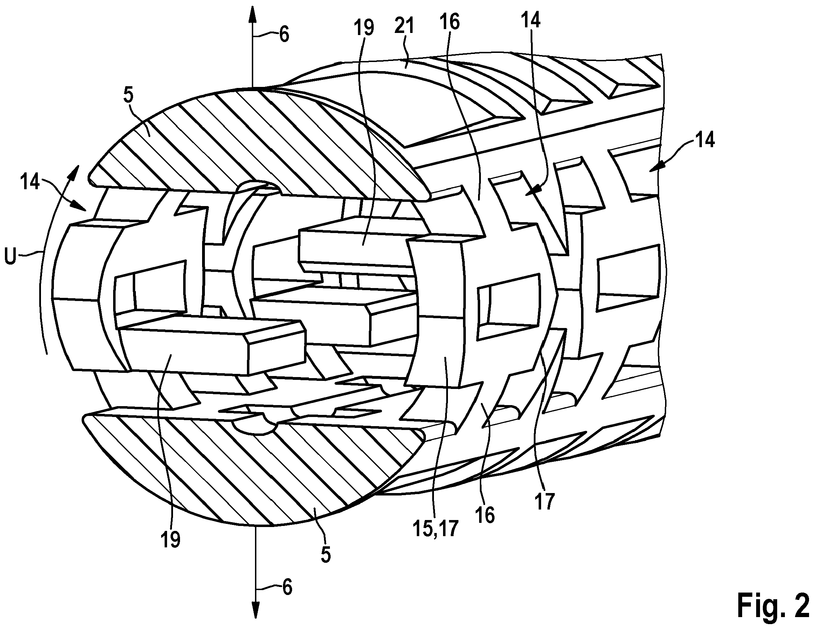

Damit während des Aufspreizens des Spreizdübels 1 die zweiten Spreizschenkel 7 im Wesentlichen axialfest bezüglich der ersten Spreizschenkel 5 gehalten werden, und nicht etwa die zweiten Spreizschenkel 7 durch das Einschrauben einer Schraube in den Spreizdübel 1 zwischen den ersten Spreizschenkeln 5 herausgezogen werden, ist eine Nut-Zapfen-Verbindung zwischen einem jeweiligen Verbinder 14 und den jeweiligen zweiten Spreizschenkeln 7 ausgebildet. Hierzu weist jeder der Verbinder 14 einen an den Verbinder 14 angespritzten Zapfen 19 auf. Die Zapfen 19 erstrecken sich, wie in Figur 2 dargestellt, in Richtung der Längsachse L und in einer zu einer Axialebene parallelen Ebene 20. Jedem Zapfen 19 eines Verbinders 14 ist eine korrespondierende Nut 18 in dem jeweiligen zweiten Spreizschenkel 7 zugeordnet, was durch einen Vergleich der Figuren 2 und 3 deutlich wird. Jeder elastische Verbinder 14 ist durch die Nut-Zapfen-Verbindung nur mit dem jeweils zugeordneten zweiten Spreizschenkel 7 verbunden. Die Zapfen 19 dringen gänzlich in die korrespondierenden Nuten 18 ein, wie in Figur 4 dargestellt. Alle Nut-Zapfen-Verbindungen des Spreizdübels 1 liegen in einer gemeinsamen Ebene 20, welche parallel zu einer Axialebene des Spreizdübels 1 liegt. Durch die erfindungsgemäße Anbindung der Verbinder 14 an die jeweiligen zweiten Spreizschenkel 7 sind die zweiten Spreizschenkel 7 bezüglich der ersten Spreizschenkel 5 stabilisiert. Zudem ist durch die "einseitige" Anbindung der Verbinder 14 an den jeweiligen zweiten Spreizschenkel 7 ein optimales Aufspreizverhalten des Spreizdübels 1 gewährleistet.

Bei Betrachtung der Figuren 2, 3 und 4 wird ersichtlich, dass die ersten Spreizschenkel 5 als eine äußere Hülse 21 und die zweiten Spreizschenkel 7 als eine innere Hülse 22 ausgestaltet sind. In der Herstellung des erfindungsgemäßen Spreizdübels 1 wird in einem Mehrkomponentenspritzgießverfahren zuerst die innere Hülse 22 mit den Nuten 18 aus dem zweiten Kunststoff gespritzt. Anschließend wird um die innere Hülse 22 "herum" die äußere Hülse 21 aus dem ersten Kunststoff gespritzt. Hierbei werden die ersten Spreizschenkel 5 zusammen mit den Verbindern gespritzt, wobei die Zapfen 19 in die entsprechenden Nuten 18 eingespritzt werden.

### Bezugszeichenliste

### Spreizdübel

- 1: Spreizdübel
- 2: vorderes Ende des Spreizdübels 1
- 3: hinteres Ende des Spreizdübels 1
- 4: Spreizabschnitt
- 5: erster Spreizschenkel
- 6: erste Spreizrichtung des ersten Spreizschenkels 5
- 7: zweiter Spreizschenkel
- 8: zweite Spreizrichtung des zweiten Spreizschenkels 7
- 9: vorderer Teilbereich des zweiten Spreizschenkels 7
- 10: mittlerer Teilbereich des zweiten Spreizschenkels 7
- 11: hinterer Teilbereich des zweiten Spreizschenkels 7
- 12: Spreizkanal
- 13: Rippe
- 14: Verbinder
- 15: Verbinderkörper
- 16: Verbindungssteg
- 17: Verbindungsabschnitt
- 18: Nut
- 19: Zapfen
- 20: Ebene
- 21: äußere Hülse
- 22: innere Hülse
- U: Umfangsrichtung des Spreizdübels 1
- L: Längsachse

## Patentansprüche

1. Spreizdübel (1), der sich entlang einer Längsachse (L) zwischen einem vorderen und einem hinteren Ende (2, 3) des Spreizdübels (1) erstreckt,
wobei zwischen dem vorderen und dem hinteren Ende (2, 3) ein Spreizabschnitt (4) ausgebildet ist, der durch Einbringen eines Spreizkörpers in den Spreizdübel (1) aufspreizbar ist,
wobei der Spreizdübel (1) im Spreizabschnitt (4) sich in Richtung der Längsachse (L) erstreckende erste Spreizschenkel (5) aus einem ersten Kunststoff aufweist, die sich beim Aufspreizen des Spreizdübels (1) voneinander radial bezüglich der Längsachse (L) entfernen, **dadurch gekennzeichnet, dass**
in Umfangsrichtung (U) des Spreizdübels (1) zwischen benachbarten ersten Spreizschenkeln (5) mindestens ein zweiter Spreizschenkel (7) aus einem zum ersten Kunststoff verschiedenen zweiten Kunststoff angeordnet ist,
**dass** die ersten Spreizschenkel (5) durch mindestens einen verformbaren Verbinder (14) miteinander verbunden sind, und
**dass** der Verbinder (14) mit nur einem der zweiten Spreizschenkel (7) verbunden ist.

2. Spreizdübel (1) nach Anspruch 1, **dadurch gekennzeichnet, dass** der Verbinder (14) und der zweite Spreizschenkel (7) durch eine Nut-Zapfen-Verbindung verbunden sind.

3. Spreizdübel (1) nach Anspruch 2, **dadurch gekennzeichnet, dass** ein Zapfen (19) und eine Nut (18) der Nut-Zapfen-Verbindung in Richtung der Längsachse (L) verlaufen.

4. Spreizdübel (1) nach einem der Ansprüche 1 bis 3, **dadurch gekennzeichnet, dass** die ersten Spreizschenkel (5) durch mehrere entlang der Längsachse (L) angeordnete Verbinder (14) miteinander und mit dem einen zweiten Spreizschenkel (7) verbunden sind.

5. Spreizdübel (1) nach einem der vorhergehenden Ansprüche, **dadurch gekennzeichnet, dass** der Spreizdübel (1) zwei sich bezüglich der Längsachse (L) gegenüberliegende erste Spreizschenkel (5), zwei zweite Spreizschenkel (7), sowie mindestens zwei gegenüberliegende Verbinder (14) aufweist, wobei jeder der Verbinder (14) mit genau einem der zweiten Spreizschenkel (7) verbunden ist und dass die formschlüssigen Verbindungen in einer gemeinsamen Ebene (20) angeordnet sind.

6. Spreizdübel (1) nach einem der Ansprüche 1 bis 5, **dadurch gekennzeichnet, dass** der Spreizdübel (1) einander paarweise zugeordnete, in der Längsrichtung (L) des Spreizdübels (1) benachbarte Verbinder (14) aufweist.

7. Spreizdübel (1) nach Anspruch 5 oder 6, **dadurch gekennzeichnet, dass** die Verbindungen der Verbinder (14) mit dem einen zweiten Spreizschenkel (7) auf einer, insbesondere zur Längsachse (L) parallelen, Geraden angeordnet sind.

8. Spreizdübel (1) nach einem der Ansprüche 1 bis 7, **dadurch gekennzeichnet, dass** die ersten Spreizschenkel (5) die zweiten Spreizschenkel (7) zumindest teilweise umhüllen.

9. Spreizdübel (1) nach einem der Ansprüche 1 bis 8, **dadurch gekennzeichnet, dass** die ersten Spreizschenkel (5) als eine äußere Hülse (21) und die zweiten Spreizschenkel (7) als eine innere Hülse (22) ausgestaltet sind, wobei die innere Hülse (22) formschlüssig in der äußeren Hülse (21) gelagert ist.

10. Spreizdübel (1) nach einem der vorhergehenden Ansprüche, **dadurch gekennzeichnet, dass** der Verbinder (14) einen Verbinderkörper (15) mit mindestens zwei Verbindungsstegen (16) aufweist, über die die zwei benachbarten ersten Spreizschenkel (5) mit dem Verbinder (14) verbunden sind, wobei zwischen den Verbindungsstegen (16) der Verbinderkörper (15) Verbindungsabschnitte (17) aufweist, die sich beim Aufspreizen der ersten Spreizschenkel (5) so bewegen, dass sie sich weiter in Umfangsrichtung (U) des Spreizdübels (1) erstrecken als bei nicht aufgespreiztem Spreizdübel (1).

11. Spreizdübel (1) nach Anspruch 10, **dadurch gekennzeichnet, dass** die Verbindungsstege (16) und die Verbindungsabschnitte (17) spiegelsymmetrisch bezüglich einer Spiegelebene, die durch die Längsachse (L) verläuft, ausgestaltet sind.
